(19) **Europäisches Patentamt European Patent Office Office européen des brevets**

(11) **EP 3 602 209 B1**

(12) **EUROPEAN PATENT SPECIFICATION**

(45) Date of publication and mention of the grant of the patent:
**17.08.2022 Bulletin 2022/33**

(51) International Patent Classification (IPC):
**G05B 13/04** *(2006.01)*

(52) Cooperative Patent Classification (CPC):
**G05B 13/048**

(21) Application number: **18710160.5**

(22) Date of filing: **08.02.2018**

(86) International application number:
**PCT/JP2018/005363**

(87) International publication number:
**WO 2018/173569 (27.09.2018 Gazette 2018/39)**

(54) **MODEL PREDICTIVE CONTROL SYSTEM AND METHOD FOR CONTROLLING OPERATION OF MACHINE**

MODELLPRÄDIKTIVES STEUERUNGSSYSTEM UND VERFAHREN ZUR STEUERUNG DES BETRIEBS EINER MASCHINE

SYSTÈME DE COMMANDE PRÉDICTIVE ET PROCÉDÉ DE COMMANDE DU FONCTIONNEMENT D'UNE MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017 US 201715468481**

(43) Date of publication of application:
**05.02.2020 Bulletin 2020/06**

(73) Proprietor: **Mitsubishi Electric Corporation Chiyoda-ku Tokyo 100-8310 (JP)**

(72) Inventors:
- **KNIAZEV, Andrei**
  **Cambridge, Massachusetts 02139 (US)**
- **MALYSHEV, Aleksandr**
  **Cambridge, Massachusetts 02139 (US)**

(74) Representative: **Pfenning, Meinig & Partner mbB Patent- und Rechtsanwälte Joachimsthaler Straße 10-12 10719 Berlin (DE)**

(56) References cited:
**US-A1- 2016 147 203**

- **SARAF NILAY ET AL: "Fast model predictive control based on linear input/output models and bounded-variable least squares", 2017 IEEE 56TH ANNUAL CONFERENCE ON DECISION AND CONTROL (CDC), IEEE, 12 December 2017 (2017-12-12), pages 1919-1924, XP033304099, DOI: 10.1109/CDC.2017.8263930 [retrieved on 2018-01-18]**
- **JAMES B RAWLINGS: "Tutorial Overview of Model Predictive Control", IEEE SIGNAL PROCESSING MAGAZINE, IEEE SERVICE CENTER, PISCATAWAY, NJ, US, vol. 20, no. 3, 1 June 2000 (2000-06-01), pages 38-52, XP011084188, ISSN: 1053-5888**

EP 3 602 209 B1

**Description**

[Technical Field]

This invention relates generally to controlling an operation of a machine, and more particularly to controlling the operation using a model predictive control (MPC) over a receding horizon.

[Background Art]

In machine control, a controller, which can be implemented using one or combination of software or hardware, generates commands values for input to a machine based on measurements obtained, e.g., from sensors and/or estimators, from outputs of the machine. The controller selects the input so that the machine operates as desired, for instance, the operation follows a desired reference profile, or regulates the outputs to a specific value. In several cases, the controller enforces constraints on the inputs and outputs of the machine, for instance, ensuring the corresponding variables are in some predetermined ranges to ensure safe machine operation from a physical, specification. In order to enforce such constraints, the controller often uses a model of the machine to predict what behavior the machine produces when a command, i.e., a control input, is applied. One example of a process in a controller that is capable of achieving control of a machine while enforcing constraints on the machine inputs and outputs is model predictive control (MPC).

The MPC is based on a horizon optimization of a model of a machine dynamics and has the ability to anticipate future events to take appropriate control actions. This is achieved by optimizing the operation of the machine over a future time-horizon subject to constraints, and only implementing the control over the current timeslot. For example, the constraints can represent physical limitation of the machine, safety limitations on the operation of the machine, and performance limitations on a trajectory. A control strategy for the machine is admissible when the motion generated by the machine for such a control strategy satisfies all the constraints. For example, at time t, the current state of the machine is sampled and an admissible cost minimizing control strategy is determined for a relatively short time horizon T in the future. Specifically, an online or real-time calculation determines a cost-minimizing control strategy until time *t+T.* After the step of the control is implemented, the state is sampled again and the calculations are repeated starting from the now current state, yielding a new control and new predicted state path. The prediction horizon shifts forward, and for this reason MPC is also called receding horizon control.

The MPC can be used to generate the actual trajectory of the motion of the machine based on a model of the system and the desired reference trajectory by solving an optimal control problem over a future time subject to various physical and specification constraints of the system. The MPC aims for optimizing, e.g., minimizing or maximizing, performance indices of the motion of the machine, such as an error between a reference and an actual motion of the machine, the machine energy consumption, and induced system vibration.

Because the MPC is a model-based framework, the performance of the MPC inevitably depends on the quality of the prediction model used in the optimal control computation. However, in most cases, the model for the machine dynamics is unknown *a priori,* as some parameters are not measured precisely. Thus, the controller may need to estimate unknown parameters of the model of the machine, during already operation of the machine, and thus, also enforce constraints while the parameters are estimated. The methods to handle such problems include adaptive or learning-based MPC, where an MPC control problem is augmented with a closed-loop identification scheme in order to learn the unknown machine parameters. By learning the unknown parameters, the operation of the machine achieved by the controller is improved.

However, current approaches of adaptive and learning based MPC are limited for multiple reasons. For example, while estimating the unknown parameters, constraints can be violated or the control performance may be excessively reduced in order to conservatively enforce the constraints. In fact, several existing methods, such as a method described in U.S. 2011/0022193, simply ignore the constraints and thus are incapable of producing admissible control strategies for machines subject to constraints. The method described in U.S. 2016/0147203 addresses the issue of the constraints, but still estimating the unknown parameters of the model of machine dynamics remains a difficult problem.

Accordingly, there is a need for a method for controlling an operation of a machine using the MPC that includes uncertainty suitable for controlling the operation of the machine subject to the constraints.

[Summary of Invention]

The invention is defined by the features of the independent claims. The invention is based on recognition that parameters of a model of dynamics of a machine are rarely known exactly. Different identification and learning methods aim to update the parameters of the model to reduce the uncertainty about true values of those parameters, but hardly eliminate that uncertainty. Further, in addition to the uncertainties due to lack of precise models, the uncertainties of the control can be also introduced by inaccuracies in measurements, errors caused by model reductions, and uncertainties in the state features.

The invention is based on surprising realization that various model predictive control (MPC) methods use the model of the dynamics of the machine as a hard constraint on control optimization even when the parameters of the model are not precisely known. Even if those MPC methods attempt to improve the accuracy of the model over time, inaccuracy of the model for even brief period of time can lead the machine into an undesirable state.

The invention is based on realization that the model of the dynamic of the machine in MPC should be used as a soft constraint rather than the hard constraint. In such a manner, the state of the machine that deviates from a value satisfying the model of the dynamic can be discouraged but allowed in acknowledgment that such a state can satisfy the model of the dynamic if the parameters of the model are known precisely.

For example, typically, a model of dynamics of a machine is represented by an equation of dynamics of the machine. Such an equation serves as a hard constraint in MPC optimization forcing the MPC to produce the control inputs controlling the operation of the machine that move the machine into the state that makes the equation of dynamics of the machine true.

The invention removes such a hard constraint on MPC by moving the equation of dynamics of the machine into a cost function of MPC served to optimize the performance of the machine. For example, in one embodiment, a cost function includes a first term of a state of the machine penalizing deviation of the state of the machine from an objective of MPC and a second term of the state of the machine penalizing deviation of the state of the machine from a value satisfying an equation of dynamics of the machine.

The combination of those terms allows to balance the performance of the operation of the system with the degree of uncertainty of the parameters of the model. For example, lesser value of the uncertainty of the model can justify an increase of the weight of the second term in the cost function. Greater value of the uncertainty motivates decreasing the weight. For example, in one embodiment, the cost function balances weights of the first term and the second term in finding the sequence of control inputs using a weighted least squares method.

In some implementations, the second term includes a member of the equation of dynamics of the machine determined such that the optimization of the cost function performed by the processor encourages determining the member of the equation of dynamics of the machine that makes the equation of dynamics of the machine true.

For example, the equation of dynamics of the machine describes the time dependence of a state in a space, e.g., a geometrical space, a control space, etc. The equation of dynamics of the machine is a statement of an equality containing the state of the machine as a variable. The members of the equality can be placed on the same side to allow minimum or maximum optimization.

For example, if the equation of dynamics of the machine is $x' = v(x)$, such an equation can be rewritten as *magnitude* $(x' - v(x)) = 0$, wherein the *"magnitude"* of an argument is a nonnegative number that determines a deviation of the argument from zero. In such a manner, when the magnitude term *magnitude* $(x' - v(x))$ is a part of the cost function, the minimization of the cost function also minimizes the deviation of the difference $x' - v(x)$ from zero and thus encourages making the equation of dynamics of the machine true. Conversely, if the MPC optimization maximizes the cost function, the equation of dynamics of the machine can be rewritten as $-$ *magnitude* $(x' - v(x)) = 0$. In this example, the member of the equation *magnitude* $(x' - v(x))$ or $-$ *magnitude* $(x' - v(x))$, allows considering the equation of dynamics as a soft constraint rather than the equality forming the hard constraint. An example of *magnitude* $(x' - v(x))$ can be an integral (squared) of the absolute value of $(x' - v(x))$.

Some embodiments are based on realization that when the equation of dynamics of the machine is used as a soft constraint, additional soft constraint on the state of the machine can be used to further improve the accuracy of the control in the presence of uncertainties. For example, some embodiments include a third term of the state in the cost function of MPC that penalizes deviation of the state from a soft constraint, such as a constraint on a structure of the state and a constraint on behavior of the state. Examples of such a soft constraint include a constraint on a sparsity of the state, a constraint on a symmetry of the state, a constraint on stability of the state, a constraint on smoothness of the state, a constraint on rate of change of the state in time.

Some embodiments are based on realization that when the equation of dynamics of the machine is used as a soft constraint, various data assimilation methods can be used to further improve the accuracy of the control. The data assimilation can be used for estimating the state of the system with uncertainties, both in dynamics and observations, where observations of the actual system are incorporated into the model state of a numerical model of that system. Applications of data assimilation arise in many fields of geosciences, e.g., in weather forecasting and hydrology.

Some embodiments are based on recognition that it is possible to use data assimilation to estimate the current state of the machine outside of the MPC future horizon optimization. However, some embodiments are based on realization that it is possible to use methods borrowed from the data assimilation inside MPC future horizon, when the equation of the dynamics of the machine is used as the soft constraint. The usage of the data assimilation within the MPC can help to resolve uncertainties and incomplete information about the system, leading to more accurate and robust control determination, compared to the traditional MPC built atop of data assimilation.

For example, in one embodiment, the cost function includes a third term performing data assimilation of the state within the time horizon, such that the processor produces the sequence of control inputs to move the state of the machine according to the assimilated states. Because the data assimilation is used inside the MPC time horizon, the embodiment optimizes the cost function using a variant of a Kalman filter, which is suitable for the data assimilation. Examples of the variant of a Kalman filter include one or combination of a classical Kalman filter (KF), an extended Kalman filter (EKF), an unscented Kalman filter (UKF), an ensemble Kalman filter (EnKF), an ensemble Kalman Smoother (EnKS), a 4D variational model (4DVAR).

Some embodiments are based on another realization that when the equation of the dynamics of the machine is used as a soft constraints, that equation does not have to be exact and can be simplified. For example, in one embodiment the equation of dynamics of the machine approximates an exact equation of dynamics of the machine.

Accordingly, one embodiment discloses a model predictive control (MPC) system for controlling an operation of a machine according to a model of the machine dynamics including a memory to store a cost function including a first term defined by an objective of the MPC and a second term penalizing deviation of a state of the machine from a value satisfying an equation of dynamics of the machine; a processor to optimize the cost function over a time-horizon subject to constraints to produce a sequence of control inputs to control the state of the machine over the time horizon; and a controller to control the machine according to the first control input in the sequence.

Another embodiment discloses a method for controlling an operation of a machine using a model predictive control (MPC) according to a model of the machine dynamics, wherein the method uses a processor coupled with stored instructions implementing the method, wherein the instructions, when executed by the processor carry out at least some steps of the method. The method includes retrieving from a memory a cost function including a first term defined by an objective of the MPC and a second term penalizing deviation of a state of the machine from a value satisfying an equation of dynamics of the machine; optimizing the cost function over a time-horizon subject to hard constraints to produce a sequence of control inputs to control the state of the machine over the time horizon; and controlling the machine according to the first control input in the sequence.

Yet another embodiment discloses a non-transitory computer readable storage medium embodied thereon a program executable by a processor for performing a method. The method includes retrieving from a memory a cost function including a first term defined by an objective of the MPC and a second term penalizing deviation of a state of the machine from a value satisfying an equation of dynamics of the machine; optimizing the cost function over a time-horizon subject to hard constraints to produce a sequence of control inputs to control the state of the machine over the time horizon; and controlling the machine according to the first control input in the sequence.

[Brief Description of Drawings]

[Fig. 1]

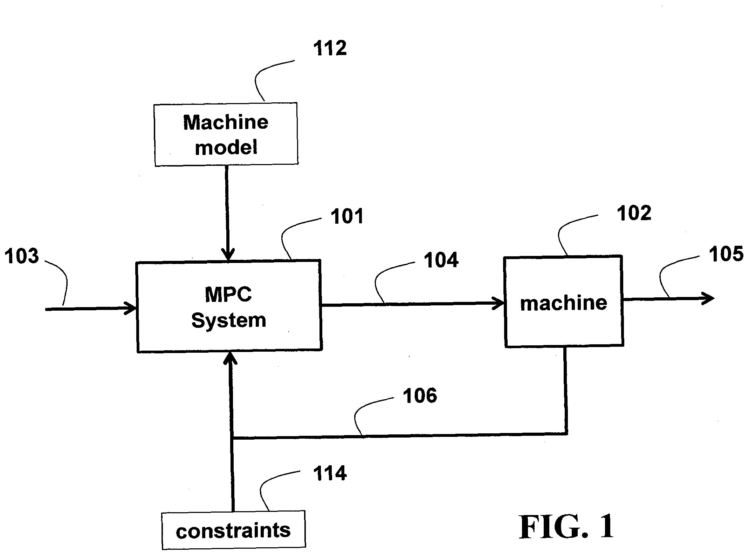

Figure 1 shows a block diagram of a control system for controlling an operation of a machine according to some embodiments.
[Fig. 2]

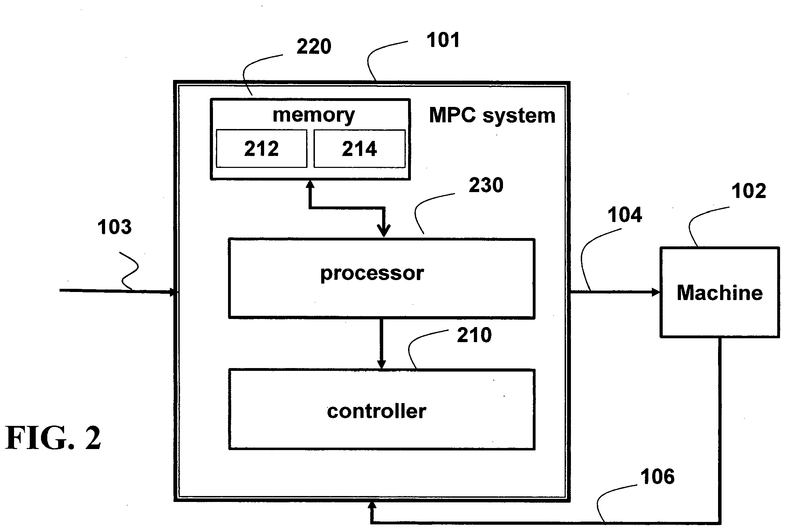

Figure 2 shows a block diagram of a model predictive control (MPC) system for controlling the operation of the machine according to some embodiments.
[Fig. 3]

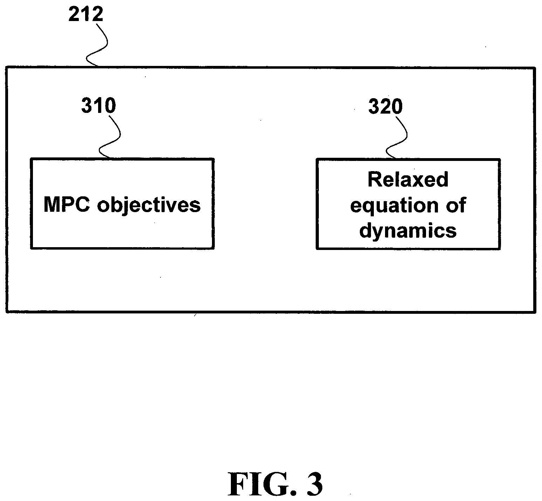

Figure 3 shows a schematic of a cost function used by some embodiments.
[Fig. 4]

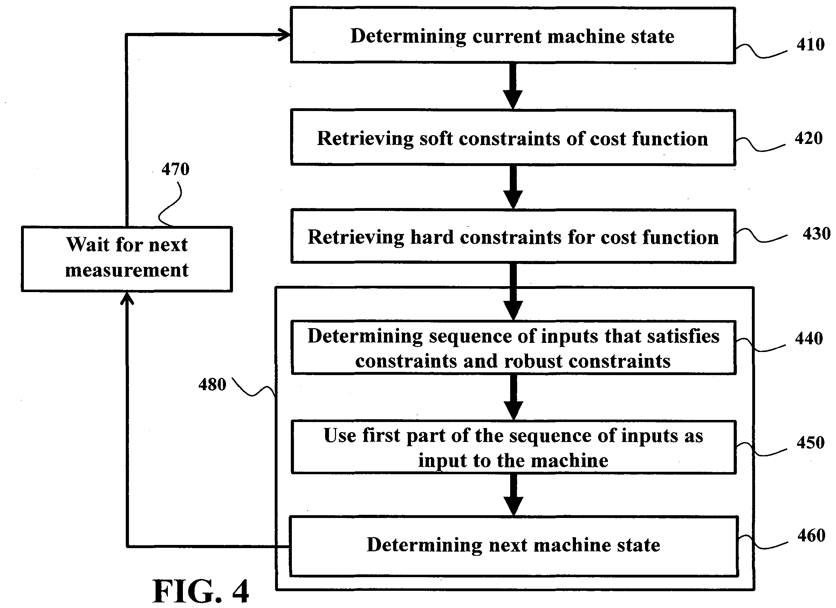

Figure 4 shows a block diagram of a method for controlling the operation of the machine executed by the modules of the control system of Figure 1 and/or Figure 2 according to some embodiments.
[Fig. 5]

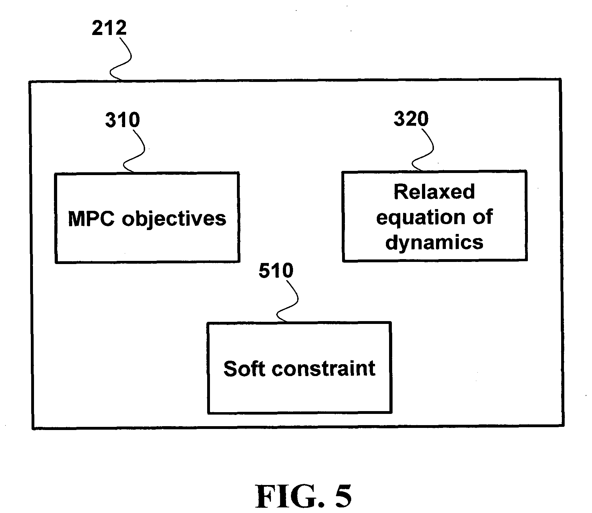

Figure 5 shows a schematic of the cost function used by another embodiment.
[Fig. 6]

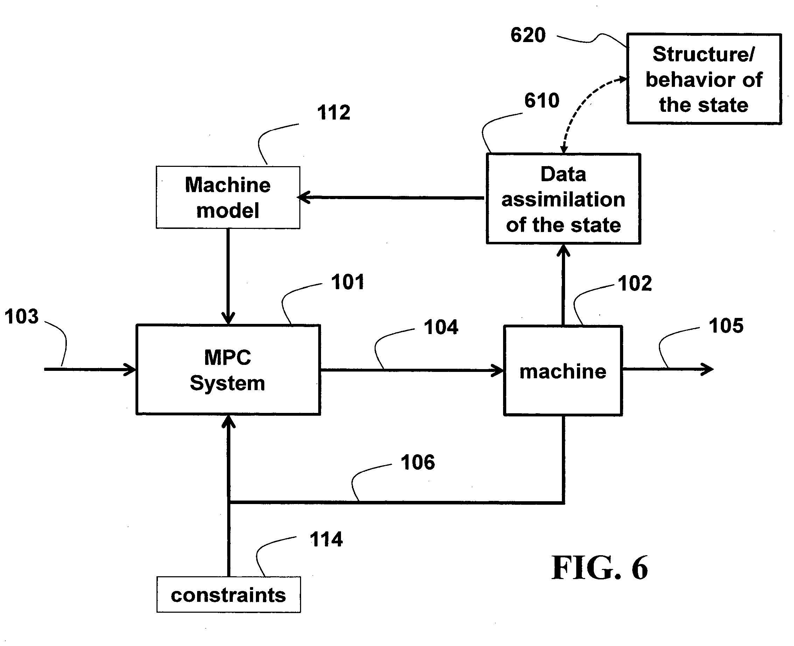

Figure 6 shows a block diagram of a method for using data assimilation inside the MPC future horizon according to some embodiments.
[Fig. 7]

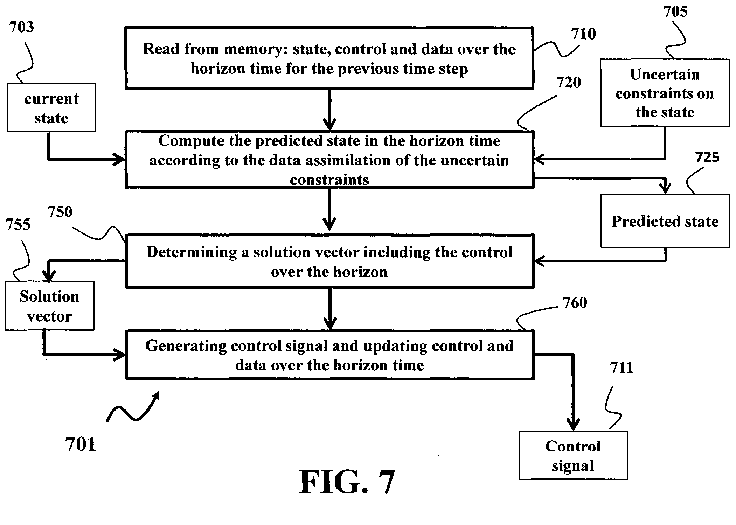

Figure 7 shows a block diagram of a method for implementing MPC modified with data assimilation according to one embodiment.
[Fig. 8]

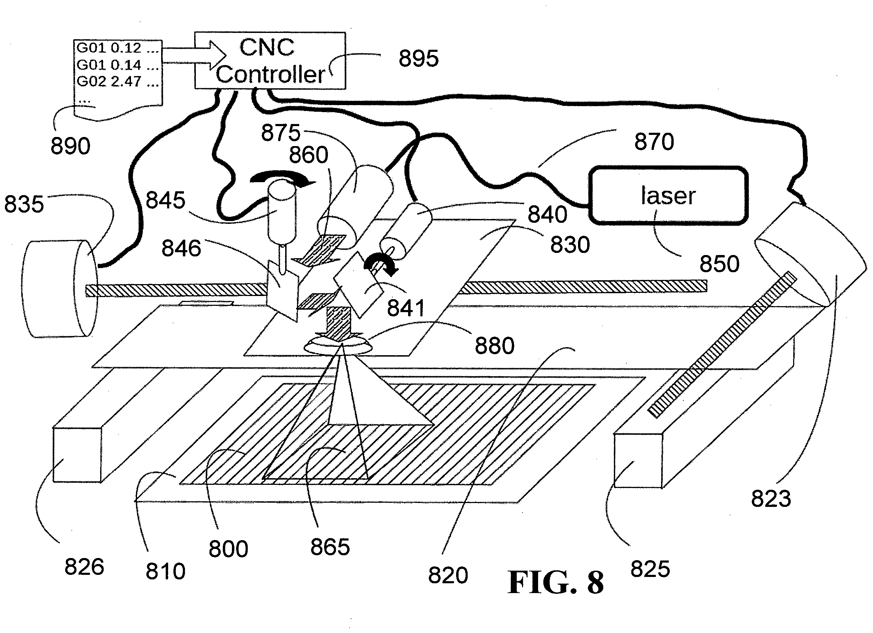

Figure 8 shows an isometric view of an example laser processing machine controlled by one embodiment.

[Description of Embodiments]

Figure 1 shows a block diagram of a control system 101 for controlling an operation of a machine 102 according to some embodiments. The control system 101 determines the control input to the machine 102 by optimizing a cost function using a model of the dynamics of the machine over a time-horizon according to principles of model predictive control (MPC). To that end, the control system 101 is referred herein as an MPC system.

The machine 102 is a device whose operation changes quantities such as positions, velocities, currents, temperatures, numerical values, in response to commands. As used herein, the operation of the machine determines a motion of the machine that changes such quantities. The control system receives a desired motion 103 for the machine, such as a desired trajectory or target point for some of the quantities, and controls the machine via control inputs 104. The control inputs can include commands to change parameters of the operation of the machine or can include actual values of the parameters such as voltages, pressures, torques, forces that affect the machine motion resulting in the generation of quantities 105 for the machine.

The control system 101 receives information 106 about the machine motion, from sensors, hardware, or software connected directly or remotely to the machine. The information 106 includes a state of the machine. The machine uses the state for the selection of the control inputs 104. The information 106 can include some or all of the motion quantities 105 and can also include additional information about the machine. The quantities 105, the control inputs 104 or a combination thereof, can be requested to remain in some pre-defined ranges according to constraints 114 on the operation of the machine.

Figure 2 shows block diagram of a model predictive control (MPC) system for controlling an operation of a machine according to some embodiments. The MPC system includes a memory 220 to store a cost function 212 and constraints 214. The MPC system also includes a processor 230 to optimize the cost function 212 over a time-horizon subject to constraints 214 to produce a sequence of control inputs to control the state of the machine 102 over the time horizon, and a controller 210 to control the machine according to the first control input 104 in the sequence.

The invention is based on recognition that parameters of a model of dynamics of a machine are rarely known exactly. Different identification and learning methods aim to update the parameters of the model to reduce the uncertainty about true values of those parameters but hardly eliminate that uncertainty. Further, in addition to the uncertainties due to lack of precise models, the uncertainties of the control can be also introduced by inaccuracies in measurements, errors caused by model reductions, and uncertainties in the state features.

The invention is based on surprising observation that various model predictive control (MPC) methods use the model of the dynamics of the machine as a hard constraint on control optimization even when the parameters of the model are not precisely known. Even if those MPC methods attempt to improve the accuracy of the model over time, inaccuracy of the model can lead the machine into an undesirable state, or make the MPC optimization problem over the horizon self-contradicting (infeasible), while in reality the optimal control may still exist.

The invention is based on realization that the model of the dynamic of the machine in MPC should be used as a soft constraint rather than the hard constraint. In such a manner, the state of the machine that deviates from a value satisfying the model of the dynamic can be discouraged, but allowed in acknowledgment that such a state can satisfy the model of the dynamic, if the parameters of the model are known precisely.

For example, typically the model of dynamics of the machine is represented by an equation of dynamics of the machine. The equation of dynamics serves as a hard constraint in MPC optimization forcing the MPC to produce the control inputs controlling the operation of the machine that move the machine into the state that makes the equation of dynamics of the machine true. The invention removes such a hard constraint on MPC by moving the equation of dynamics of the machine into a cost function of MPC served to optimize the performance of the machine.

Figure 3 shows a schematic of a cost function 212 used by some embodiments. The cost function includes a first term 310 defined by an objective of the MPC and a second term 320 penalizing deviation of a state of the machine from a value satisfying an equation of dynamics of the machine. Examples of MPC objectives represented by the first term 310 includes a term penalizing deviation of the state of the machine from a value defined by a reference trajectory for a time of control, and a term minimizing a cost of operation of the machine, such as time of the operation and/or the energy required for performing the operation.

For example, the first term 310 can include a function J (u, p) of the control inputs $u(\tau)$ and a performance metric p , such that the optimization, min $J$, e.g., minimization of the first term min J , u,p optimizes, e.g., minimizes, the performance metric.

The second term 320 is based on understanding that MPC or the model of the machine includes at least one parameter of uncertainty. For example, a model of an arm of a robot can include an uncertainty about a mass of the arm carrying an object. A model for the movement of a train can include an uncertainty about a friction of the wheels with the rails in current weather conditions. To that end, in some embodiments, the second term includes a member of the equation of dynamics of the machine determined such that the optimization of the cost function performed by the processor encourages determining the state of the machine that makes the equation of dynamics of the machine true. In such a manner, the model of the machine servers as a soft constraint, which is more appropriate than the hard constraint when the model includes the uncertainty.

In some embodiments, the equation of dynamics of the machine describes the time dependence of a state in a space, e.g., a geometrical space, a control space, etc. The equation of dynamics of the machine is a statement of an equality containing the state of the machine as a variable. The members of the equality can be placed on the same side to allow minimum or maximum optimization.

For example, if the equation of dynamics of the machine is x' = v(x), such an equation can be rewritten as x' - v(x) = 0. If the difference x' - v(x) appears in the cost function, the minimization of the cost function encourages making the equation of dynamics of the machine true. However, the cost function value is a real number, while the x' - v(x) is commonly a vector function. Determining *magnitude* (x' - v(x)) converts the vector function argument x' - v(x) into a nonnegative number *magnitude* (x' - v(x)) that characterizes a deviation of the argument x' - v(x) from the origin 0. For example, the magnitude of a vector can be determined as a length of the vector, while the magnitude of a function can be determined as an integral of the absolute value of the function.

Therefore, the term *magnitude* (x' - v(x)) can be, for example, simply added to the cost function to be miminized. Conversely, if the MPC optimization maximizes the cost function, the equation of dynamics of the machine can be rewritten as *-magnitude* (x' - v(x)) = 0, and the term *magnitude* (x' - v(x)) can be subtracted from the cost function to be maximized.

In this example, the extra term in the cost function is *magnitude* (x' - v(x)) or - *magnitude* (x' - v(x)), which allows considering the equation of dynamics as a soft constraint rather than the equality forming the hard constraint.

Following the abovementioned example, the cost function 212 F can include

$$F(J(u, p) + magnitude (x` - v(x)).$$

Figure 4 shows a block diagram of a method for controlling an operation of the machine executed by the modules of the control system 101 according to some embodiments. The method controls the operation of the machine with control inputs determined using the model of the machine dynamics based on an optimization of a cost function that includes that model of the machine dynamics as the soft constraint. The method determines 410 a current state of the machine resulted from the controlling with a previous control input determined for a previous iteration. The method retrieves 420 from the memory soft constraints of the cost function specifying a soft constraint on the objective of the control and a soft constraint on following the model of the machine dynamic and retrieves 430 from the memory the hard constraints on optimization of the cost function.

Next, the method determines 480 a current control input for the controlling at the current iteration by optimizing the cost function. For example, the method determines 440 a sequence of future inputs, from current time instant for a fixed amount of time in the future, long at least as the to obtain a new machine state measurement, such that the predicted future machine states and inputs satisfies the hard constraints. The first part of the input sequence, for duration equal to the amount of time needed to obtain a new measurement of the state of the machine, is applied 450 as current control input to the machine. Based on the current state of the machine, current model of the machine, and current control input to the machine, the next state of the machine is determined 460, and the controller waits 470 until a new state measurement is received.

Figure 5 shows a schematic of a cost function used by another embodiment. This embodiment is based on realization that, when the equation of dynamics of the machine is used as a soft constraint, additional soft constraint 510 on the state of the machine can be used to further improve the accuracy of the control in the presence of uncertainties. For example, some embodiments include a third term of the state in the cost function of MPC that penalizes deviation of the state from a soft constraint, such as a constraint on a structure of the state and a constraint on behavior of the state. Examples of such a soft constraint include a constraint on a sparsity of the state, a constraint on a symmetry of the state, a constraint on stability of the state, a constraint on smoothness of the state, a constraint on rate of change of the state in time.

Some embodiments are based on realization that when the equation of dynamics of the machine is used as a soft constraint, various data assimilation methods can be used to further improve the accuracy of the control. The data assimilation can be used for estimating the state of the system with uncertainties, both in dynamics and observations, where observations of the actual system are incorporated into the model state of a numerical model of that system. Applications of data assimilation arise in many fields of geosciences, e.g., in weather forecasting and hydrology.

Figure 6 shows a block diagram of a method for using data assimilation 610 inside the MPC future horizon according to some embodiments. The usage of the data assimilation within the MPC can help to resolve uncertainties and incomplete information about the system, leading to more accurate and robust control determination, compared to the traditional MPC built atop of the data assimilation. For example, in some embodiments, the data assimilation 610 adjusts values of the state determined using the equation of the dynamics of the machine according to the model 112 within the time-horizon based on previous values of the state.

Some embodiments are based on recognition that data assimilation can be applied to estimation of the current state of the controlled system, e.g., from the past observations (history matching). However, there are evidently no state observations inside MPC over the time-horizon, since the horizon is in the future. Therefore, using data assimilation methods inside MPC future horizon optimization appears impossible and thus meaningless.

However, some embodiments are based on recognition that data assimilation can be beneficial inside MPC for the determining of the control, where the future state observations are being replaced with additional features. The additional features may include the structure of the state, e.g., desired symmetries of the state, wherein the symmetry of the state is determined off-line, and types and parameters of the symmetry are stored in the memory of the controller. To that end, in some implementation, the data assimilation 610 can adjust the values of the state by imposing soft constraints 620 on a structure of the state and/or behavior of the state.

For example, the type of the symmetry of the state can be periodic in time, wherein the parameter of the symmetry in this case is a length of the period. The state may also exhibit its symmetry in space, e.g., a vector of the state may be symmetric for any time, e.g., for the state vector with 20-components, the first 10 components may be known to be the same as the second 10 components. The state may as well be known to belong to a symmetric surface, e.g., a sphere, as it changes in time, wherein the parameters of the symmetry, in this case, a center and a radius of the sphere, are known a priori and stored in the memory of the controller.

Some embodiments are based on another recognition that a known sparsity of the state can be used in data assimilation, to substitute for the unknown future state measurements. The sparsity is determined off-line, and a pattern and parameters of the sparsity are stored in the memory of the controller. For example, the vector of the state may be sparse, i.e., having components with specific indexes in the vector vanishing, wherein the indexes represent the pattern of the sparsity, while the total number of the indexes is viewed as the parameter of the sparsity.

Additionally or alternatively, several embodiments substitute future state observations in data assimilation with the properties of the state describing a desired state behavior by one or a combination of: the state satisfies conservation laws, state is smooth in time, state is consistent with a known model for a state estimator, a state tracking, following a given profile, a state stability, state boundedness. The conservation law can for example be a mass preservation of the state in some applications of MPC. The state smoothness, for example, requiring that one or a combination of derivatives of the state in time and in space is bounded by absolute value by a given tolerance of the smoothness, wherein orders of the derivatives and value of the first tolerance are stored in the controller memory.

Some embodiments are based on another recognition that one or a combination of the stability and the boundedness of the state can also serve as the substitute in data assimilation within MPC for the unavailable measurements of the state over the future horizon. The stability of the state can be defined using a parameter of the stability, stored in the memory of the controller that bounds changes in the state with respect to changes in the model.

Alternatively, or additionally, some embodiments determine the function of the desired state behavior off-line using one or a combination of the following properties of the control, wherein the control tracks a given profile of the control, is smooth, is stable in time, is bounded in time. Coefficients of the function of the properties of the state, determined using the properties of the control are stored in the memory of the controller.

According to some embodiments of the invention, the cost function of MPC of the system is modified with a function of data assimilation of the state of the system, wherein the function of data assimilation penalizes for a deviation of the state from the dynamics of the state, thus relaxing the equations of the dynamics of the state in the model of the system. Additionally, the cost function of MPC of the system is modified with the function of one or combination of a structure of the state and a behavior of the state, which is given in addition to the model of the system that typically only includes the equations of the dynamics of the state and various constraints. The influence of the modifications on the MPC control solution can be explained as acting as soft constraints in the cost function, such that each control input moving the controlled system into a state is penalized, e.g., for a deviation of the state from a structure of the state and/or a behavior of the state. In such a manner, all control inputs over the time horizon jointly perform state assimilation to deal with the uncertainties in the model of the system.

Figure 7 shows a block diagram of a method 701 for implementing MPC modified with data assimilation according to one embodiment. The cost function of MPC is modified so as the terms for the system dynamics are replaced by the terms of data assimilation including both penalization for a deviation from the model system dynamics and penalization for a deviation of the state from its structure and behavior. An optimal solution of the data assimilation problem, determined by the penalization terms, gives a predicted state over a future time horizon, which in turn is used for producing a sequence of control inputs. The first control input from this sequence is used as the control input at the current system state.

The method 701 executes an on-line control step generating a control signal 711 for controlling the system based on the measured and/or estimated values of the current state 703 and the values 710 of state, control, and data over the horizon time for the previous time step of the control. The method determines 720 the predicted state 725 in the future horizon time according to the model of the system, admitting uncertainties by assimilating soft (uncertain) constraints 705 on the state, and then determines 750 a solution vector 755 in the horizon time according to the necessary optimality conditions. After the solution vector is determined, the method generates 760 the control signal 711 and updates the values of the state, the control and the data over the horizon time. The updated values are used by the method at the next time step of the control.

For example, in one embodiment, the cost function includes a third term performing data assimilation of the state within the time horizon, such that the processor produces the sequence of control inputs to move the state of the machine according to the assimilated states. Because the data assimilation is used inside the MPC time horizon, the embodiment optimizes the cost function using a variant of a Kalman filter, which is suitable for the data assimilation. Examples of the variant of a Kalman filter include one or combination of a classical Kalman filter (KF), an extended Kalman filter (EKF), an unscented Kalman filter (UKF), an ensemble Kalman filter (EnKF), an ensemble Kalman Smoother (EnKS), a 4D variational model (4DVAR).

Some embodiments are based on another realization that when the equation of the dynamics of the machine is used as a soft constraints, that equation does not have to be exact and can be simplified. For example, in one embodiment the equation of dynamics of the machine approximates an exact equation of dynamics of the machine. For example, one embodiment uses the cost function of the MPC modified using approximate equations of the dynamics of the state of the system, wherein the approximate equations are determined by a model reduction applied to exact equations of the dynamics of the state of the system.

In one embodiment, not covered by the claims, MPC determines the current control input $u(t)$ by solving a prediction model on a horizon $[t, t+T]$. As a starting point for a general framework, this embodiment considers a modified variant of the prediction model, where the control $u(\tau)$ and a parameter vector $p$ minimize the performance index $J(u, p)$: min J,

$$\min_{u,p} J$$

where

$$J = \phi(x(\tau), p)\big|_{\tau=t+T} + \int_t^{t+T} L(\tau, x(\tau), u(\tau), p)\, d\tau$$

subject to the uncertain model dynamics

$$\frac{dx}{d\tau} = f(\tau, x(\tau), u(\tau), p) + \eta_f, \quad \tau \in [t, t+T], \tag{1}$$

uncertain constraint on the state

$$g(\tau, x(\tau), u(\tau), p) + \eta_g = 0, \quad \tau \in [t, t+T], \tag{2}$$

and the certain constraints

$$x(\tau)\big|_{\tau=t} = x(t), \tag{3}$$

$$C(\tau, x(\tau), u(\tau), p)\big|_{\tau \in [t, t+T]} = 0, \tag{4}$$

$$\psi(x(\tau), p)\big|_{\tau=t+T} = 0. \tag{5}$$

The initial value $x(\tau)|_{\tau=t}$ for the time-dependent differential equation (1) is the current state vector $x(t)$ of the dynamic system. The control vector $u = u(\tau)$, which solves the prediction problem, is used as an input to control the dynamic system at time $t$. The components of the vector $p(t)$ are parameters of the system. The nonlinear equation (1) describes the model system dynamic, which is used for prediction. When the time varying disturbances $\eta_f$ and $\eta_g$ are of random nature, the covariance matrices $C_f$ and $C_g$ are available.

Supplementary to the minimizing the original cost function, the performance index $J(u, p)$, the disturbance vectors $\eta_f$ and $\eta_g$ are minimized using the 4DVar/MHE minimization terms by choosing a suitable solution $x(\tau)$ over the horizon:

$$\min_{x(\tau)} \frac{1}{2} \{ \mathsf{P} f(\tau, x(\tau), u(\tau), p) - dx/d\tau \mathsf{P}^2_{C_f^{-1}}$$

$$+ \mathsf{P} g(\tau, x(\tau), u(\tau), p) \mathsf{P}^2_{C_g^{-1}} \},$$

where $\mathsf{P} f \mathsf{P}^2_{C^{-1}} = \int f^T C^{-1} f \, d\tau$ is the $L_2$ norm with the weight matrix $C^{-1}$. Throughout the remainder, we use an unconventional notation for the norms, e.g., $\mathsf{P} f \mathsf{P}$ actually means the norm $off$, commonly denoted by $||f||$. In our test examples, we use the covariance matrices of the form $C_f = \alpha^{-1}I$ and $C_g = \beta^{-1}I$ with $\alpha = 1$ and a suitable scalar $\beta > 0$, I being the identity matrix.

According to an embodiment not covered by the invention, we relax the equation of the dynamics by adding the 4DVar/MHE minimization terms to the original cost function, the performance index $J(u, p)$. Minimization of the modified cost function can be performed by the alternating direction method of multipliers (ADMM) or the Alternating Minimization Algorithm (AMA), where one repeatedly alternates minimization for the control and for the disturbances.. We note that the solution over the horizon has the fixed initial value $x(t)$ in contrast to the free choice in 4DVar/MHE models.

Continuous formulation of the horizon prediction problem stated above can be discretized on a uniform time grid over the horizon $[t,t+T]$ partitioned into $N$ equal time steps of size $\Delta\tau$, and the time-continuous vector functions $x(t)$ and $u(\tau)$ are sampled at the grid points $\tau_i$, $i = 0,1,...,N$ and denoted by the indexed values $x_i$ and $u_i$ respectively. The integral of the performance cost $J$ over the horizon is approximated by means of the rectangular quadrature rule. The time derivative of the state vector is approximated by the forward difference formula.

Before deriving the Euler equations for the NMPC formulation, this embodiment discretizes the 4DVar model with the fixed $x_0$:

$$\min_{x_1, x_2, \ldots x_N} \sum_{i=0}^{N-1} \mathsf{P}(x_{i+1} - x_i)/\Delta\tau - f(\tau_i, x_i, u_i, p) \mathsf{P}^2_{C_f^{-1}}$$

$$+ \mathsf{P} g(\tau_{i+1}, x_{i+1}, u_{i+1}, p) \mathsf{P}^2_{C_g^{-1}},$$

For further convenience, the embodiment introduces the block bidiagonal matrix

$$B = \frac{1}{\Delta\tau} \begin{pmatrix} I & & & \\ -I & I & & \\ & & \ddots & \ddots \\ & & & -I & I \end{pmatrix}$$

and the vectors

$$R = B \begin{bmatrix} x_1 \\ x_2 \\ \vdots \\ x_N \end{bmatrix} - \begin{bmatrix} f(\tau_0, x_0, u_0, p) + x_0/\Delta\tau \\ f(\tau_1, x_1, u_1, p) \\ \vdots \\ f(\tau_{N-1}, x_{N-1}, u_{N-1}, p) \end{bmatrix},$$

$$G = \begin{bmatrix} g(\tau_1, x_1, u_1, p) \\ g(\tau_2, x_2, u_2, p) \\ \vdots \\ g(\tau_N, x_N, u_N, p) \end{bmatrix}.$$

In this notation, the discretized 4DVar problem takes the following form:

$$\min_x R^T C_f^{-1} R + G C_g^{-1} G.$$

The gradients with respect to x of the vectors G and R equal

$$\nabla G = \begin{bmatrix} \nabla_x g(\tau_1, x_1, u_1, p) \\ & \nabla_x g(\tau_2, x_2, u_2, p) \\ & & \ddots \\ & & & \nabla_x g(\tau_N, x_N, u_N, p) \end{bmatrix},$$

$$\nabla R = B - \begin{bmatrix} 0 \\ \nabla_x f(\tau_1, x_1, u_1, p) & 0 \\ & \nabla_x f(\tau_2, x_2, u_2, p) \\ & & \ddots & & \ddots \\ & & & \nabla_x f(\tau_{N-1}, x_{N-1}, u_{N-1}, p) & 0 \end{bmatrix}.$$

Hence the solution $x_i$, $i = 1, \ldots N$, of 4DVar satisfies the equation

$$(\nabla R)^T C_f^{-1} R + (\nabla G)^T C_g^{-1} G = 0. \tag{6}$$

The discretized optimal control problem NMPC is then formulated as follows:

$$\min_{u_i,p}\left[\phi(x_N,p)+\sum_{i=0}^{N-1}L(\tau_i,x_i,u_i,p)\Delta\tau\right],$$

subject to the system (6) for $x_i$ and the equality constraints

$$C(\tau_i,x_i,u_i,p)=0,\quad i=0,1,...,N-1, \tag{7}$$

$$\psi(x_N,p)=0. \tag{8}$$

Necessary optimality conditions for the discretized horizon problem can be derived by means of the discrete Lagrangian function

$$\mathsf{L}(X,U)=\phi(x_N,p)+\sum_{i=0}^{N-1}L(\tau_i,x_i,u_i,p)\Delta\tau$$

$$+\lambda_0^T[x_0-x(t)]$$

$$+[\lambda_1^T...\lambda_N^T][(\nabla R)^T C_f^{-1}R+(\nabla G)^T C_g^{-1}G]\Delta\tau$$

$$+\sum_{i=0}^{N-1}\mu_i^T C(\tau_i,x_i,u_i,p)\Delta\tau+v^T\psi(x_N,p),$$

where the variables are in two larger vectors $X = [x_{i\,\lambda i}]^T$ , $i = 0,1,..., N$ , and $U = [u_i\ \mu_i\ v\ p]^T$, $i = 0,1,...,N-1$ . *Here,*

$\lambda=[\lambda_1^T...\lambda_N^T]^T$ is the costatate vector, $\mu$ is the Lagrange multiplier vector associated with the constraint (7). The terminal constraint (8) is relaxed by the aid of the Lagrange multiplier $v$.

Calculating the derivatives of the Lagrangian L obtains the necessary optimality conditions, the Karush-Kuhn-Tucker (KKT) stationarity conditions: $L_{\lambda_i} = 0$, $L_{x_i} = 0$ , $i = 0,1,...,N$, $L_{u_i} = 0$, $L_{\mu_j} = 0$, $i = 0,1,...,N-1$, $L_{v_k} = 0$, $L_{p_l} = 0$.

For example, one implementation further converts the KKT conditions into a nonlinear equation $F[U,x,t] = 0$, where the vector $U$ combines the control input $u$, the Lagrange multiplier $\mu$, the Lagrange multiplier $v$, and the parameter p, all in one vector:

$$U(t)=[u_0^T,...,u_{N-1}^T,\mu_0^T,...,\mu_{N-1}^T,v^T,p^T]^T.$$

The vector argument $x$ in $F[U,x,t]$ denotes the current measured or estimated state vector, which serves as the initial vector $X_0$ in the following procedure, which eliminates the state variables $X_i$ and costate variables $\lambda_i$.

One embodiment, having the current state $x_0$, measured or estimated, computes $X_i$ , $i = 1,2...,N$ , by solving equations (6) instead of the forward Euler method $x_{i+1} = x_i + f(\tau_i,x_i,u_i,p)\Delta\tau$. Then computes the costates $_{\lambda i}]^T$ , , $i = N, N-1,1$, from the system of linear equations

$$\frac{\partial L}{\partial x}(X,U)=0.$$

The value $\lambda_N$ is defined by the differentiation of the term $v^T\psi(x_N,p)$ with respect $x$.

Next, the embodiment calculates F[U,x,t], using just obtained $x_i$ and $\lambda_i$, as

$$F[U,x,t] = \begin{bmatrix} \dfrac{\partial L}{\partial u_0}(X,U) \\ \vdots \\ \dfrac{\partial L}{\partial u_i}(X,U) \\ \vdots \\ \dfrac{\partial L}{\partial u_{N-1}}(X,U) \\ C(\tau_0,x_0,u_0,p)\Delta\tau \\ \vdots \\ C(\tau_i,x_i,u_i,p)\Delta\tau \\ \vdots \\ C(\tau_{N-1},x_{N-1},u_{N-1},p)\Delta\tau \\ \psi(x_N,p) \\ \dfrac{\partial L}{\partial p}(X,U) \end{bmatrix}.$$

The equation with respect to the unknown vector U(t)

$$F[U(t),x(t),t] = 0 \qquad (9)$$

gives the required necessary optimality conditions.

Some embodiments use the dynamic system controlled with the MPC on a uniform time grid $t_j = j\Delta t$, $j = 0,1,...$ and denote $x_j = x(t_j)$. In those embodiments, Equation (9) needs to be solved at each time step $t_j$ online on the controller board, which is a challenging part of an NMPC implementation.

The nonlinear equation $F[U_j,x_j,t_j]=0$ with respect to the unknown variables $U_j = U(t_j)$ is equivalent to the following equation

$$F[U_j,x_j,t] - F[U_{j-1},x_j,t_j] = b_j,$$

where

$$b_j = -F[U_{j-1},x_j,t_j]. \qquad (11)$$

Using a small scalar h>0, which is, in general, different from the time steps $\Delta t$ and $\Delta\tau$, we introduce the forward difference operator

$$a_j(V) = (F[U_{j-1} + hV,x_j,t_j] - F[U_{j-1},x_j,t_j])/h \qquad (12)$$

approximating the derivative $F_U[U_{j-1},x_j,t_j](V)$ along the direction V. The equation $F[U_j,x_j,t_j]=0$ is equivalent to the operator equation $a_j(\Delta U_j/h)=b_j/h$, where $\Delta U_j=U_j-U_{j-1}$.

Let's introduce an $m \times m$ matrix $_{\lambda,i]}{}^T$ , with the columns $A_je_k$, $k = 1,...,m$, defined by the formula $A_je_k = a_j(e_k)$,

where m is the dimension of the vector U and $e_k$ denotes the *k-th* column of the $m \times m$ identity matrix. The matrix $A_j$ is an O(h) approximation of the Jacobian matrix $F_U[U_{j-1},x_j,t_j]$. The Jacobian matrix $F_U$ is symmetric, i.e., the Jacobian matrix $F_U[U,x,t]$ is symmetric for all *U,* x, and t.

Suppose that an approximate solution $U_0$ to the equation $F[U_0,x_0,t_0]=0$, is available. Finding sufficiently accurate approximation $U_0$ is crucial for success of Newton-like methods and search for it is usually a challenging operation.

The first block entry *of $U_0$* is taken as the input control $u_0$ at the state $x_0$. The next state $x_1 = x(t_1)$ is either sensor estimated or computed by the formula $x_1 = x_0 + f(t_0,x_0,u_0)\Delta t$ ; cf. (1). At the time $t_j$, j > 1, we have the state $x_j$ and the vector $U_{j-1}$ from the previous time . Our goal is to solve the following equation with respect to V :

$$a_j(V) = b_j/h. \qquad (13)$$

Then set $\Delta U_j = hV$, $U_j = U_{j-1} + \Delta U_j$ and choose the first block component of u, p) as the control $u_j$. The next system state $X_{j+1} = x(t_{j+1})$ is either sensor estimated or computed by the formula $x_{j+1} = x_j + t_j]x_j, u_j)\Delta t$.

A direct way to solve the operator equation (13) is forming the matrix $A_j$ explicitly and then solving the system of linear equations $A_j\Delta U_j = b_j$ ; e.g., by the Gaussian elimination. A faster alternative is solving (13) by the GMRES iterative method, where the operator $a_j(V)$ is used without explicit construction of the matrix $A_j$.

One embodiment numerically calculates a minimum-time motion from an initial state $x_0$ to a terminal state $x_f$ over the unit two-dimensional sphere in $R^3$: The system dynamics is governed by the system of ordinary differential equations

$$\dot{x} = \begin{bmatrix} 0 & 0 & \cos u \\ 0 & 0 & \sin u \\ -\cos u & -\sin u & 0 \end{bmatrix} x,$$

where the control input u is subject to the inequality constraint $|u-c| \leq r$, which we relax with the equality constraint

$$(u-c)^2 + u_d^2 - r^2 = 0.$$

The variable $u_d$ is fictitious and controlled by the scalar $W_d$ introduced below. The cost function is

$$J = p - \int_t^{t_f} w_d u_d$$

, where $P = t_f - t$ is the time to destination, and $W_d$ is a small positive constant.

This embodiment selects the receding horizon coinciding with the interval [t,tf]. The horizon is parameterized by the dimensionless time $\tau \in [0,1]$ by means of the linear mapping $\tau \to t + \tau p$ . The normalized interval [0,1] is partitioned uniformly into the grid $\tau_i = i\Delta\tau$, i = 0,1,..., N, with the step size $\Delta_\tau = 1/N$. The discretized variables include the state $x_i$ and costate $\lambda_i$, the control input $u_i$ and slack variable $u_{d,i}$, the Lagrange multipliers $\mu_i$ and v, the parameter p .

The uncertain predictive model of the dynamical system on the receding horizon is the forward Euler method

$$\frac{x_{i+1} - x_i}{p\Delta\tau} = A(u_i)x_i,$$

where

$$A(u_i) = \begin{bmatrix} 0 & 0 & \cos u_i \\ 0 & 0 & \sin u_i \\ -\cos u_i & -\sin u_i & 0 \end{bmatrix}.$$

The truncation error of the Euler methods is the disturbance $\eta_f$ in (1). Notably, $\eta_f$ is not random here and highly correlated with the state function $x(\tau)$. It is directly verified that the continuous system dynamics $\dot{x} = A(u)x$ satisfies the equality constraint on the state $x_i^T x_i - 1 = 0$, $i = 1,...,N$. Hence the constraint (4) has $g(x_i) = x_i^T x_i - 1$ and $\eta_g = 0$. The 4DVar approximation is designed to satisfy the constraint (4) "softly". Note that for this problem it is possible to satisfy the state constraint $x_i^T x_i - 1 = 0$ exactly by projecting $x_{i+1}$ onto the unit sphere after every step of the Euler method.

Yet another way to satisfy the equality constraint $x_i^T x_i - 1 = 0$ is to use the so-called exponential integrator $x_{j+1} = exp(A(u_j)x_jx_j)$, which preserves the norm $Px_jP_2$. We use this exponential integrator for numerical simulation of the system dynamics for the test example.

The discretized cost function is

$$ J = p\left(1 - \Delta \tau w_d \sum_{i=0}^{N-1} u_{d_i}\right). $$

One implementation selects 4DVar approximation of the state $X_i$, with the fixed initial value $X_0$ and a scalar parameter $\beta \geq 0$,

$$ \min_{x_i} \sum_{i=1}^{N} Px_i - x_{i-1} - \Delta \tau p A(u_{i-1})x_{i-1}P_2^2 + \beta^2 \mid x_i^T x_i - 1 \mid^2 . \tag{14} $$

The parameter $\beta$ determines the force of satisfying the equality constraint $x_i^T x_i - 1 = 0$ : the larger the constant $\beta$ the larger the enforcement.

According to some embodiments, the 4DVar optimization problem is equivalent to the system of nonlinear equations

$$ \left(B^T B + 2\beta^2 \begin{bmatrix} (x_1^T x_1 - 1)I & & \\ & \ddots & \\ & & (x_N^T x_N - 1)I \end{bmatrix}\right)\begin{bmatrix} x_1 \\ \vdots \\ x_N \end{bmatrix} $$

$$ - \begin{bmatrix} (\Delta \tau p A(u_0) + I)x_0 \\ 0 \\ \vdots \\ 0 \end{bmatrix} = S(x,u,p) = 0, $$

where

$$ B = \begin{bmatrix} I & & & \\ -\Delta \tau p A(u_1) - I & I & & \\ & \ddots & \ddots & \\ & & -\Delta \tau p A(u_{N-1}) - I & I \end{bmatrix}. $$

The corresponding discrete Lagrangian function has the form

$$L = p\left(1 - \Delta \tau w_d \sum_{i=0}^{N-1} u_{d,i}\right) + \lambda^T S(x,u,p)$$

$$+ \sum_{i=0}^{N-1} \mu_i^T [(u_i - c)^2 + u_{d,i}^2 - r^2] + v^T (x_N - x_f).$$

The costate $\lambda$ satisfies the formula

$$\lambda = \begin{bmatrix} \lambda_1 \\ \vdots \\ \lambda_N \end{bmatrix} = (B^T B + 2\beta^2 C)^{-1} \begin{bmatrix} 0 \\ \vdots \\ 0 \\ -v \end{bmatrix},$$

where C is the block diagonal matrix with the blocks $(x_i^T x_i - 1)I + 2x_i x_i^T$ :

$$C = blockdiag\{(x_i^T x_i - 1)I + 2x_i x_i^T\}.$$

The function $F(U,x_0,t)$, where

$$U = [u_0, \ldots, u_{N-1}, u_{d,0}, \ldots, u_{d,N-1},$$

$$\mu_0, \ldots, \mu_{N-1}, v, p]^T,$$

has the following rows from the top to bottom:

$$2\begin{bmatrix} \mu_0(u_0 - c) \\ \vdots \\ \mu_{N-1}(u_{N-1} - c) \end{bmatrix} - \Delta \tau p (B\lambda)^T \begin{bmatrix} A'(u_0)x_0 \\ \vdots \\ A'(u_{N-1})x_{N-1} \end{bmatrix}$$

$$- \Delta \tau p \begin{bmatrix} 0 \\ A'(u_1)\lambda_1 \\ \vdots \\ A'(u_{N-1})\lambda_{N-1} \end{bmatrix}^T (Bx);$$

$$2\begin{bmatrix} \mu_0 u_{d,0} \\ \vdots \\ \mu_{N-1} u_{d,N-1} \end{bmatrix} - \Delta \tau p w_d \begin{bmatrix} 1 \\ \vdots \\ 1 \end{bmatrix};$$

$$\begin{bmatrix} (u_0 - c)^2 + u_{d,i}^2 - r^2 \\ \vdots \\ (u_{N-1} - c)^2 + u_{d,N-1}^2 - r^2 \end{bmatrix};$$

$$x_N - x_f;$$

$$1 - \Delta \tau w_d \sum_{i=0}^{N-1} u_{d,i} - \Delta \tau (B\lambda)^T \begin{bmatrix} A(u_0)x_0 \\ \vdots \\ A(u_{N-1})x_{N-1} \end{bmatrix}$$

$$-\Delta \tau \begin{bmatrix} 0 \\ A(u_1)\lambda_1 \\ \vdots \\ A(u_{N-1})\lambda_{N-1} \end{bmatrix}^T (Bx).$$

Some embodiments consider problems with the state constraints that derived from the system dynamics. The embodiments reduce the number of terminal constraints to the dimension of the smooth manifold determined by the equality constraint on the state. For example, in one case, the dimension of the sphere equals 2, and, therefore, the Lagrange multiplier $v$ contains only 2 components instead of 3. If the above described reduction of the terminal constraint is not fulfilled, then the subsequent computations lead to singular Jacobians in the Newton-type iterations.

Laser processing machine

Some embodiments provide a system and a method for controlling an operation of a redundant laser processing machine. Some embodiments control the machine using an optimization-based receding horizon control subject to constraints that guarantees the feasibility of tracking the reference trajectory with an error defined by bounds of a tracking error. A non-limited example of the receding horizon control is a Model Predictive Control (MPC).

Figure 8 shows an isometric view of an example laser processing machine according to one embodiment of an invention. The laser processing machine is shown for illustration purpose and the design of this machine is not intended to limit the scope of the invention. The laser processing machine includes a slow actuator and a fast actuator, examples of which are provided below.

A workpiece 800 is supported on a beam dump 810 beneath a gantry 820. The gantry moves on rails 825 and 826 along a first direction, e.g., along a Y-axis. The gantry 820 is moved along the first direction by a first servo motor and a first screw 823. A platform 830 is arranged on the gantry 820 and moves with the gantry along the first direction. Also, the platform 830 is moved along a second direction, e.g., along an X-axis, by a second servo motor and a second screw 835. In this embodiment, the gantry 820, the first servo motor and the first screw 823, and the second servo motor and the second screw 835 form a motion system for moving the platform in a plane parallel to the workpiece along the first and the second direction. However, other embodiments of the invention use different types of the prismatic joints to move the platform. For example, the first prismatic joint can include a first direction linear drive motor, and the second prismatic joint can include a second direction linear drive motor.

A galvano-assembly, e.g., a two-axis galvano scan head having two orthogonal galvano drives, i.e., a first drive 840 and a second drive 845, a first mirror 841 and a second mirror 846, is arranged on the platform 830. A third motion of the first mirror 841 caused by the first driver 840 positions the laser beam along a third direction, and a fourth motion of the second mirror 846 caused by the second driver 845 positions the laser beam along a fourth direction.

In the context of this description, the gantry 820 is a first actuator, or the slow actuator, with large operating range, and the galvano assembly is a second actuator, or the fast actuator, with smaller operating range. However, such usage is not intended to limit the scope of the claims. For example, in some variations the first actuators is the fast actuator, and the second actuator is the slow actuator.

In various embodiments, the galvano assembly is arranged on the platform such that the third direction is fixed with respect to the first direction, and the fourth direction is fixed with respect to the second direction. For example, in one embodiment, the first direction coincides with the third direction, and the second direction coincides with the fourth direction. In another embodiment, the first direction forms an angle of 45 degrees with the third direction, and the second direction forms the angle of 45 degrees with the fourth direction.

The galvano assembly can be affixed to the platform in order to fix the direction of motion. Alternatively, the galvano assembly can be arranged on the platform rotationally, such that the mutual orientations of the first, the second, the third, and the fourth directions can be fixed before, or during the operation of the laser processing machine. In the context of this invention, the galvano assembly is the second stage, or fast stage, with small operating range.

The laser processing machine can include a laser 850 for directing a cutting laser beam 860 to the first 841 and the second 846 mirrors of the galvano assembly via an optical fiber 870 and a collimator 875. In an alternative embodiment, the laser beam is directed to the galvano assembly via diagonal mirrors moving along the Y-gantry and X-axis platform. However, other variations are also possible.

The collimated cutting laser beam 860 is directed by the mirrors through a focusing module 880 for focusing the laser beam on the workpiece, producing a combined X-axis and Y-axis galvano assembly scan area 865 on the workpiece 800, and cutting the workpiece 800. An example of the focusing module 880 is a field-flattening F-theta lens or a non-telecentric F-theta lens. A size of the workpiece 800 can be greater than the galvano scan area 865 due to the motion of the platform.

In some embodiments, the control module includes a computer numerical control (CNC) controller 895. Other embodiments can use different types of controllers. The control module may control the motion system and the galvano assembly according to precomputed G-code 890 that defines a trajectory of positions of the laser beam or can perform the computations to decide how to control the machine. For example, the computations can define successive positions for the X-axis platform 830, the Y-axis gantry X-motion galvano assembly and mirror 841, and Y-motion galvano assembly and mirror 846.

In general the machines are built with actuators that have different dynamical behaviors. For example, the first actuator is in usually significantly slower than the second actuator, due to the difference in the displaced mass. From this difference, the indicated names of slow and fast actuators are derived.

One embodiment models the dynamics of the slow actuator as

$$p(k+1) = p(k) + T_s v(k)$$

$$v(k+1) = v(k) + \frac{T_s}{J}(L\tau - \beta v(k)) \quad ,$$

where p is a position of the slow actuator, v is a velocity of the slow actuator, $\tau$ is a torque of the slow actuator, $T_s$ is a control period of the machine at which a control cycle is executed, k is an index of the control cycle, J is an inertia of the slow actuator, L is a length of a pitch of a ball screw which converts the longitudinal motion into linear motion, b is a friction coefficient determining the friction torque on the slow actuator for a given angular velocity of the slow actuator.

According to embodiments of the invention, one, or both, of the equations of the dynamics can be relaxed, by adding the magnitudes of the corresponding differences to the original cost function. For example, the first equation

$$p(k+1) = p(k) + T_s v (k)$$

is first rewritten as

$$p(k+1) - p(k) - T_s v (k) = 0$$

and then as

$$magnitude (p(k+1) - p(k) - T_s v (k)) = 0$$

wherein the *"magnitude"* can be, e.g., a vector (such as a 2-) norm, may be squared. The first original equation of the dynamics $p(k+1) = p(k) + T_s v (k)$ is then dropped, and the extra term *magnitude ($_p(k+1) - p(k) - T_s v (k)$)* is added to the original cost function. As a result, the first original equation of the dynamics $p(k+1) = p(k) + T_s v (k)$ can be violated in the MPC minimization of the modified cost function, although encouraged to be true. That can be beneficial if the parameter $T_s$ in the first original equation of the dynamics $p(k+1) = p(k) + T_s v (k)$ is uncertain.

In general, parameters $p$, v, $t$ are two dimensional vectors with x and y coordinates, and are subject to constraints

$$p_{\min} \le p(k) \le p_{\max}$$

$$v_{\min} \le v(k) \le v_{\max}$$

$$a_{\min} \le a(k) \le a_{\max}$$

$$\tau_{\min} \le \tau(k) \le \tau_{\max} \qquad ,$$

that define lower and upper bounds on the position $p$, velocity $v$, acceleration $a$, and torque $r$, and can be kept as the hard constraints, according to some embodiments of the invention.

One embodiment expresses the model of the slow actuator as a linear difference equation

$$x(k+1) = Ax(k) + Bu(k)$$

$$y(k) = Cx(k) \qquad ,$$

where k is a time instant when the signals are sampled, i.e., the index of the control cycle, $u$ is the machine input, $y$ is the machine output, x is the state of the machine, and A, $B,$ C, are parameters of the model. For example, $x=[p, v]'$, $y=p$, $u = \tau,$ and A, B, C are matrices of appropriate dimensions, and the operation of the slow actuator is subject to linear constraints

$$x(k) \in X, \ u(k) \in U, \ \forall k \ge 0 \qquad ,$$

where $X, U$ are polyhedral sets.

According to other embodiments of the invention, one, or both, of the equations of the dynamics can be relaxed, by adding the magnitudes of the corresponding differences to the original cost function. For example, the first equation

$$x(k+1) = Ax(k) + Bu(k)$$

is first rewritten as

$$x(k+1) - Ax(k) - Bu(k) = 0$$

and then as

$$magnitude\ (x(k+1) - Ax(k) - Bu(k)) = 0$$

wherein the *"magnitude"* can be, e.g., a vector (such as a 2-) norm, may be square, i.e., *magnitude* ($x(k + 1) - Ax(k) - Bu(k)) = \|x(k + 1) - Ax(k) - Bu(k)\|^2$. The first original equation of the dynamics $x(k+1) = Ax(k) + Bu(k)$ is then dropped, and the extra terms *magnitude* ($x(k+1) - Ax(k) - Bu(k))$ for all k are added to the original cost function. As a result, the first original equation of the dynamics $x(k+1) = Ax(k) + Bu(k)$ can be violated in the MPC minimization of the modified cost function, although encouraged to be true. That can be beneficial if at least one of the matrices $A$ and $B$ in the first original equation of the dynamics $x(k+1) = Ax(k) + Bu(k)$ is uncertain. Additionally, or alternatively, the relaxation can be beneficial if the first original equation of the dynamics $x(k+1) = Ax(k) + Bu(k)$ is known to hold only approximately, e.g., because it approximates a more accurate nonlinear equation of the dynamics $x(k+1) = F(x(k), u(k))$, that cannot be directly used in MPC due to impractical computational costs of real time nonlinear minimization.

The second equation of the dynamics $y(k)=Cx(k)$ can be similarly additionally or alternatively relaxed, being replaced with adding the extra terms *magnitude (y(k) - Cx(k))* to the original cost function to be minimized in the real time MPC optimization over the horizon.

Some embodiments of the invention are based on a realization that just relaxing the equations of the dynamics may lead to the situation where the optimal control solution of the MPC optimization problem is attained on the state that does exactly satisfy the original equations of the dynamics, even though they are relaxed. Such a trivial scenario might be undesirable and can be avoided, in some embodiments of the invention, by including additional terms in the cost function, describing one or a combination of desired behavior and structure of the one or a combination of the control and the state. In the laser cutter example, the additional terms can, e.g., penalize acceleration of the slow actuator, where the additional term in the cost function would be the magnitude $|a|^2$ of the acceleration $a$, despite of the fact that the acceleration is already hard constrained by its given upper bound.

Some embodiments of the invention propose minimizing the modified, with the additional terms, cost function using the alternating direction method of multipliers (ADMM) or the Alternating Minimization Algorithm (AMA), where one repeatedly alternates minimization of the for the control and for the state. For example, let the original cost function be $J(u, x, y)$ the first additional term be $\alpha\|y - Cx\|^2$, encouraging $y(k)=Cx(k)$ for all $k$, and the second additional term be $\beta\|x\|^2$, encouraging small x. Then the modified least squares cost function is

$$J(u, x, y) + \alpha\|y - Cx\|^2 + \beta\|x\|^2.$$

Rather than minimizing with the respect to all variables together, one can repeatedly alternate minimization of the for the control u and for the state and the observation $x$ and y, possibly computationally advantageous.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Further, it should be appreciated that a computer may be embodied in any of a number of forms, such as a rack-mounted computer, a desktop computer, a laptop computer, minicomputer, or a tablet computer. Such computers may be interconnected by one or more networks in any suitable form, including a local area network or a wide area network, such as an enterprise network or the Internet. Such networks may be based on any suitable technology and may operate according to any suitable protocol and may include wireless networks, wired networks or fiber optic networks.

Also, the various methods or processes outlined herein may be coded as software that is executable on one or more processors that employ any one of a variety of operating systems or platforms. Additionally, such software may be written using any of a number of suitable programming languages and/or programming or scripting tools.

Also, the embodiments of the invention may be embodied as a method, of which an example has been provided. The steps performed as part of the method may be ordered in any suitable way. Accordingly, embodiments may be constructed in which acts are performed in an order different than illustrated, which may include performing some acts simultaneously, even though shown as sequential acts in illustrative embodiments.

## Claims

1. A model predictive control, in short MPC, system for controlling an operation of a machine according to a model of the machine dynamics, comprising:

   a memory (220) to store a cost function including a first term defined by an objective of the MPC
   a processor (230) to optimize the cost function over a time-horizon subject to constraints to produce a sequence of control inputs to control the state of the machine over the time horizon; and
   a controller (210, 895) to control the machine according to the first control input in the sequence.
   **characterized in that** the cost function also includes a second term penalizing deviation of a state of the machine from a value satisfying an equation of dynamics of the machine for said state

2. The system of claim 1, wherein the cost function includes a third term of the state penalizing deviation of the state from a soft constraint.

3. The system of claim 2, wherein the soft constraint includes one or combination of a constraint on a structure of the state and a constraint on behavior of the state.

4. The system of claim 1, wherein the cost function includes a third term performing data assimilation of the state within the time horizon, such that the processor (230) produces the sequence of control inputs to move the state of the machine according to the assimilated states.

5. The system of claim 1, wherein the cost function balances weights of the first term and the second term in finding the sequence of control inputs using a weighted least squares method, and wherein the weights are stored in the memory (220) of the MPC system.

6. The system of claim 1, wherein the processor (230) optimizes the cost function by repeated alternating optimization for the control inputs and for the state.

7. The system of claim 1, wherein the machine is a redundant laser processing machine.

8. A method for controlling an operation of a machine using a model predictive control, in short MPC, according to a model of the machine dynamics, wherein the method uses a processor (230) coupled with stored instructions implementing the method, wherein the instructions, when executed by the processor (230) carry out the steps of the method, comprising:

retrieving from a memory (220) a cost function including a first term defined by an objective of the MPC, optimizing the cost function over a time-horizon subject to constraints to produce a sequence of control inputs to control the state of the machine over the time horizon; and
controlling the machine according to the first control input in the sequence **characterized in that** the cost function also includes a second term penalizing deviation of a state of the machine from a value satisfying an equation of dynamics of the machine for said state .

9. The method of claim 8, wherein the cost function includes a third term of the state penalizing deviation of the state from a soft constraint, wherein the soft constraint includes one or combination of a constraint on a structure of the state and a constraint on behavior of the state.

10. The method of claim 8, wherein the cost function includes a third term performing data assimilation of the state within the time horizon, such that the processor (230) produces the sequence of control inputs to move the state of the machine according to the assimilated states.

11. The method of claim 8, wherein the machine is a redundant laser processing machine.

12. A non-transitory computer readable storage medium embodied thereon a program executable by a processor (230) for performing a method for controlling an operation of a machine using a model predictive control, in short MPC, the method comprising:

retrieving from a memory (220) a cost function including a first term defined by an objective of the MPC;
optimizing the cost function over a time-horizon subject to constraints to produce a sequence of control inputs to control the state of the machine over the time horizon; and
controlling the machine according to the first control input in the sequence;
**characterized in that** the cost function also includes a second term penalizing deviation of a state of the machine from a value satisfying an equation of dynamics of the machine for said state

**Patentansprüche**

1. Verfahren zur modellprädiktiven Steuerung, kurz MPC, zum Steuern eines Betriebs einer Maschine gemäß einem Modell der Maschinendynamik, umfassend:

einen Speicher (220) zum Speichern einer Kostenfunktion, die einen ersten Term enthält, der durch ein Ziel der MPC definiert ist

einen Prozessor (230) zum Optimieren der Kostenfunktion über einen Zeithorizont, der Beschränkungen unterliegt, um eine Folge von Steuereingaben zu erzeugen, um den Zustand der Maschine über den Zeithorizont zu steuern; und

eine Steuereinheit (210, 895) zum Steuern der Maschine entsprechend der ersten Steuereingabe in der Sequenz,

**dadurch gekennzeichnet, dass** die Kostenfunktion auch einen zweiten Term enthält, der die Abweichung eines Zustands der Maschine von einem Wert bestraft, der eine Gleichung der Dynamik der Maschine für diesen Zustand erfüllt.

2. System nach Anspruch 1, wobei die Kostenfunktion einen dritten Term des Zustands enthält, der die Abweichung des Zustands von einer weichen Bedingung bestraft.

3. System nach Anspruch 2, wobei die weiche Bedingung eine oder eine Kombination aus einer Bedingung für eine Struktur des Zustands und einer Bedingung für das Verhalten des Zustands umfasst.

4. System nach Anspruch 1, wobei die Kostenfunktion einen dritten Term enthält, der eine Datenassimilation des Zustands innerhalb des Zeithorizonts durchführt, so dass der Prozessor (230) die Folge von Steuereingängen erzeugt, um den Zustand der Maschine entsprechend den assimilierten Zuständen zu bewegen.

5. System nach Anspruch 1, wobei die Kostenfunktion die Gewichte des ersten Terms und des zweiten Terms bei der Ermittlung der Folge von Steuereingängen unter Verwendung eines Verfahrens der gewichteten kleinsten Quadrate ausgleicht und wobei die Gewichte im Speicher (220) des MPC-Systems gespeichert sind.

6. System nach Anspruch 1, wobei der Prozessor (230) die Kostenfunktion durch wiederholte alternierende Optimierung für die Steuereingänge und für den Zustand optimiert.

7. System nach Anspruch 1, wobei die Maschine eine redundante Laserbearbeitungsmaschine ist.

8. Verfahren zum Steuern eines Betriebs einer Maschine unter Verwendung einer modellprädiktiven Steuerung, kurz MPC, gemäß einem Modell der Maschinendynamik, wobei das Verfahren einen Prozessor (230) verwendet, der mit gespeicherten Befehlen gekoppelt ist, die das Verfahren implementieren, wobei die Befehle, wenn sie von dem Prozessor (230) ausgeführt werden, die Schritte des Verfahrens ausführen, umfassend:

Abrufen einer Kostenfunktion aus einem Speicher (220), die einen ersten Term enthält, der durch ein Ziel der MPC definiert ist, Optimieren der Kostenfunktion über einen Zeithorizont, der Beschränkungen unterliegt, um eine Folge von Steuereingaben zu erzeugen, um den Zustand der Maschine über den Zeithorizont zu steuern; und

Steuern der Maschine gemäß der ersten Steuereingabe in der Folge, **dadurch gekennzeichnet, dass** die Kostenfunktion auch einen zweiten Term enthält, der die Abweichung eines Zustands der Maschine von einem Wert bestraft, der eine Gleichung der Dynamik der Maschine für diesen Zustand erfüllt.

9. Verfahren nach Anspruch 8, wobei die Kostenfunktion einen dritten Term des Zustands enthält, der die Abweichung des Zustands von einer weichen Bedingung bestraft, wobei die weiche Bedingung eine oder eine Kombination aus einer Bedingung für eine Struktur des Zustands und einer Bedingung für das Verhalten des Zustands enthält.

10. Verfahren nach Anspruch 8, wobei die Kostenfunktion einen dritten Term enthält, der eine Datenassimilation des Zustands innerhalb des Zeithorizonts durchführt, so dass der Prozessor (230) die Folge von Steuereingängen erzeugt, um den Zustand der Maschine entsprechend den assimilierten Zuständen zu bewegen.

11. Verfahren nach Anspruch 8, wobei die Maschine eine redundante Laserbearbeitungsmaschine ist.

12. Nicht-flüchtiges, computerlesbares Speichermedium, auf dem ein von einem Prozessor (230) ausführbares Programm zum Durchführen eines Verfahrens zum Steuern eines Betriebs einer Maschine unter Verwendung einer modellprädiktiven Steuerung, kurz MPC, verkörpert ist, wobei das Verfahren umfasst:

Abrufen einer Kostenfunktion, die einen ersten Term enthält, der durch ein Ziel der MPC definiert ist, aus einem Speicher (220);

Optimieren der Kostenfunktion über einen Zeithorizont, der Beschränkungen unterliegt, um eine Folge von Steuereingaben zu erzeugen, um den Zustand der Maschine über den Zeithorizont zu steuern; und

Steuern der Maschine entsprechend der ersten Steuereingabe in der Sequenz;

**dadurch gekennzeichnet, dass** die Kostenfunktion auch einen zweiten Term enthält, der die Abweichung eines Zustands der Maschine von einem Wert bestraft, der eine Gleichung der Dynamik der Maschine für diesen Zustand erfüllt.

## Revendications

1. Système de commande prédictive de modèle, abrégé en MPC, destiné à commander le fonctionnement d'une machine selon un modèle de la dynamique de la machine, comprenant :

une mémoire (220), destinée à stocker une fonction de coût comprenant un premier terme défini par un objectif de la MPC ;

un processeur (230), destiné à optimiser la fonction de coût sur un horizon temporel soumis à des contraintes, pour produire une séquence d'entrées de commande afin de commander l'état de la machine sur l'horizon temporel ; et

un contrôleur (210, 895), destiné à commander la machine selon la première entrée de commande dans la séquence,

**caractérisé en ce que** la fonction de coût comprend également un deuxième terme qui pénalise un écart d'un état de la machine par rapport à une valeur qui satisfait à une équation de la dynamique de la machine pour ledit état.

2. Système selon la revendication 1, dans lequel la fonction de coût comprend un troisième terme de l'état qui pénalise un écart de l'état, d'une contrainte douce.

3. Système selon la revendication 2, dans lequel la contrainte douce comprend une contrainte sur une structure de l'état, ou une contrainte sur le comportement de l'état, voire les deux.

4. Système selon la revendication 1, dans lequel la fonction de coût comprend un troisième terme qui exécute une assimilation de données de l'état dans l'horizon temporel, de telle sorte que le processeur (230) produise la séquence des entrées de commande afin de déplacer l'état de la machine selon les états assimilés.

5. Système selon la revendication 1, dans lequel la fonction de coût équilibre les poids du premier terme et du deuxième terme en trouvant la séquence des entrées de commande en utilisant une méthode des moindres carrés pondérés, et dans lequel les poids sont stockés dans la mémoire (220) du système MPC.

6. Système selon la revendication 1, dans lequel le processeur (230) optimise la fonction de coût par une optimisation alternée répétée des entrées de commande et de l'état.

7. Système selon la revendication 1, dans lequel la machine est une machine de traitement par laser redondant.

8. Procédé destiné à commander le fonctionnement d'une machine en utilisant une commande prédictive de modèle, abrégée en MPC, selon un modèle de la dynamique de la machine, dans lequel le procédé utilise un processeur (230) couplé à des instructions stockées qui mettent en oeuvre le procédé, dans lequel les instructions, quand elles sont exécutées par le processeur (230), exécutent les étapes du procédé, comprenant les étapes suivantes :

rechercher dans une mémoire (220) une fonction de coût qui comprend un premier terme défini par un objectif de la MPC, optimiser la fonction de coût sur un horizon temporel soumis à des contraintes pour produire une séquence d'entrées de commande afin de commander l'état de la machine sur l'horizon temporel ; et

commander la machine selon la première entrée de commande dans la séquence, **caractérisé en ce que** la fonction de coût comprend également un deuxième terme qui pénalise l'écart d'un état de la machine par rapport à une valeur qui satisfait à une équation de la dynamique de la machine pour ledit état.

9. Procédé selon la revendication 8, dans lequel la fonction de coût comprend un troisième terme de l'état qui pénalise un écart de l'état, d'une contrainte douce, dans lequel la contrainte douce comprend une contrainte sur une structure de l'état, ou une contrainte sur le comportement de l'état, voire les deux.

10. Procédé selon la revendication 8, dans lequel la fonction de coût comprend un troisième terme qui exécute une assimilation de données de l'état dans l'horizon temporel, de telle sorte que le processeur (230) produise la séquence des entrées de contrôle afin de déplacer l'état de la machine selon les états assimilés.

11. Procédé selon la revendication 8, dans lequel la machine est une machine de traitement par laser redondant.

12. Support de stockage non transitoire pouvant être lu par un ordinateur, dans lequel est stocké un programme exécutable par un processeur (230), destiné à exécuter un procédé destiné à commander le fonctionnement d'une machine en utilisant une commande prédictive de modèle, abrégée en MPC, le procédé comprenant les étapes suivantes :

rechercher dans une mémoire (220) une fonction de coût qui comprend un premier terme défini par un objectif de la MPC ;
optimiser la fonction de coût sur un horizon temporel soumis à des contraintes, pour produire une séquence d'entrées de commande afin de commander l'état de la machine sur l'horizon temporel ; et
commander la machine selon la première entrée de contrôle dans la séquence ;
**caractérisé en ce que** la fonction de coût comprend également un deuxième terme qui pénalise un écart d'un état de la machine par rapport à une valeur qui satisfait à une équation de la dynamique de la machine pour ledit état.

EP 3 602 209 B1

**FIG. 1**

**FIG. 2**

MPC system 101

memory 220

212 | 214

103

processor 230

104

Machine 102

controller 210

106

212

310

**MPC objectives**

320

**Relaxed equation of dynamics**

**FIG. 3**

```
┌─────────────────────────────────────────┐
│     Determining current machine state    │  ── 410
└─────────────────────────────────────────┘
                    │
                    ▼
┌─────────────────────────────────────────┐
│   Retrieving soft constraints of cost    │  ── 420
│                function                   │
└─────────────────────────────────────────┘
                    │
                    ▼
┌─────────────────────────────────────────┐
│  Retrieving hard constraints for cost    │  ── 430
│                function                   │
└─────────────────────────────────────────┘
                    │
                    ▼
┌─────────────────────────────────────────┐
│  Determining sequence of inputs that     │  ── 440
│  satisfies constraints and robust        │
│  constraints                              │
└─────────────────────────────────────────┘
                    │
                    ▼
┌─────────────────────────────────────────┐
│  Use first part of the sequence of       │  ── 450
│        inputs as input to the machine     │
└─────────────────────────────────────────┘
                    │
                    ▼
┌─────────────────────────────────────────┐
│      Determining next machine state       │  ── 460
└─────────────────────────────────────────┘
```

470

┌──────────────────┐
│  Wait for next   │
│   measurement    │
└──────────────────┘

480

**FIG. 4**

**212**

**310**

**320**

MPC objectives

Relaxed equation of dynamics

**510**

Soft constraint

**FIG. 5**

EP 3 602 209 B1

FIG. 6

705 — Uncertain constraints on the state

725 — Predicted state

710 — 720 — Read from memory: state, control and data over the horizon time for the previous time step

Compute the predicted state in the horizon time according to the data assimilation of the uncertain constraints

Determining a solution vector including the control over the horizon

760 — Generating control signal and updating control and data over the horizon time

711 — Control signal

703 — current state

750 — 755 — Solution vector

701

**FIG. 7**

**FIG. 8**

G01 0.12 ...
G01 0.14 ...
G02 2.47 ...
...

CNC Controller

laser

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110022193 A

- US 20160147203 A